# EUROPÄISCHE PATENTSCHRIFT

(11) **EP 1 439 319 B1**
(45) Veröffentlichungstag und Bekanntmachung des Hinweises auf die Patenterteilung: **21.12.2005**
(21) Anmeldenummer: 03026201.8
(22) Anmeldetag: 14.11.2003
(51) Int. Cl.: F16F 1/40

(54) **Schichtfeder und Verfahren zu seiner Herstellung**
Multilayered spring and manufacturing method thereof
Ressort multicouche et son procédé de fabrication

(30) Priorität: 18.01.2003 DE 10301756
(43) Veröffentlichungstag der Anmeldung: 21.07.2004
(73) Patentinhaber: Carl Freudenberg KG, 69469 Weinheim (DE)
(72) Erfinder: Liebscher, Carl, 16766 Kremmen (DE)

(56) Entgegenhaltungen:
- GB-A- 259 848
- GB-A- 737 912
- US-A- 2 641 463
- US-A- 2 655 005
- US-A- 3 679 197

## Beschreibung

### Technisches Gebiet

Die Erfindung betrifft eine Schichtfeder mit einem äußeren und einem inneren Anschlussteil und dazwischen liegenden Federschichten aus wechselweise einer Elastomer-Einlage und einer Blecheinlage.

### Stand der Technik

In der Technik kommen Schichtfedern in vielfältiger Bauweise zur Anwendung. Diese Schichtfedern dienen zur Dämpfung von Schwingungen. Bekannt sind beispielsweise konusförmige Schichtfedern, die bei Schienenfahrzeugen aller Art eingesetzt werden. Sie dienen dort der Abfederung des Wagenkastens. Je nach Anwendungsgebiet können die Schichtfedern sehr unterschiedliche Formen haben, beispielsweise können die Schichtfedern aus übereinanderliegenden Ringen, Kreissegmenten oder auch Winkelelementen bestehen. Auch bei sogenannten Ultrabuchsen können Schichtfedern eingesetzt werden. In der Regel sind die Schichtfedern mit Anschlussteilen versehen, über die sie an den entsprechenden Maschinen befestigt werden. Bei Fahrzeugen wird beispielsweise ein Anschlussteil am Fahrzeugoberbau und das andere an der Fahrzeugachse befestigt. Die Anschlussteile können unterschiedlich ausgebildet sein, je nach Einsatzgebiet und liegen zumeist an der äußeren und an der inneren Seite der Schichtfeder. Die einzelnen Federschichten bestehen aus Elastomer-Einlagen, welche mit oder ohne Fenster ausgeführt werden können. Als Fenster werden Freiräume in beziehungsweise an der Elastomer-Einlage bezeichnet. Die einzelnen Elastomer-Einlagen sind durch Blecheinlagen voneinander getrennt. Die Blecheinlagen haben die Aufgabe, die Steifigkeit der Schichtfeder zu erhöhen. Die Anzahl der einzelnen Federschichten variiert je nach Einsatzgebiet der Schichtfeder und kann im Bedarfsfall auf zwei Elastomer-Einlagen reduziert werden, die in ihrer Mitte durch eine Blecheinlage verbunden sind und an ihren Seiten an die entsprechenden Anschlussteile anschließen.

Je nach Einsatzgebiet werden Schichtfedern mit sehr unterschiedlicher Konstruktion und Federwirkung verwendet. Für viele Anwendungszwecke ist es daher erforderlich, eigens für diesen Anwendungszweck hergestellte Schichtfedern einzusetzen. Die Herstellung der Schichtfedern erfolgt in der Weise, dass in einer Spritzgießform die Anschlussteile, die Blecheinlagen und gegebenenfalls die Einlagen für Fensteraussparungen in die Form eingelegt werden und danach das Elastomer eingespritzt wird. Die metallenen Anschlussteile und die Blecheinlagen werden mit den Elastomerschichten durch Vulkanisation verbunden. Die Elastomer-Einlagen werden aus einer Elastomermischung gebildet. Ein unterschiedliches Federungsverhalten der einzelnen Elastomer-Einlagen wird durch die vorgesehenen Abmessungen und gegebenenfalls eingebrachten Fenstern bestimmt. Diese Vorgehensweise bedingt eine quasi Einzelfertigung für jedes Einsatzgebiet der Schichtfeder. Die einzelnen Schichten der Schichtfedern können einen gleichen Aufbau haben, beispielsweise bei übereinanderliegenden ringförmigen Schichten, sie können aber auch unterschiedlich in ihren Abmessungen sein, wie es beispielsweise bei konusförmigen Schichtfedern der Fall ist. Gemeinsam bei den einzelnen Ausführungsformen ist, dass die Blecheinlagen eine gleichbleibende Dicke haben. Unterschiedliche dicke Blecheinlagen werden in nur äußerst seltenen Anwendungsfällen verwendet.

Die US-A-2,655,005 zeigt eine Schichtfeder mit den Merkmalen des Oberbegriffs des Anspruchs 1.

### Darstellung der Erfindung

Der Erfindung liegt die Aufgabe zu Grunde, eine Schichtfeder zu schaffen, die möglichst einfach herstellbar ist und die in weiten Anwendungsbereichen eingesetzt werden kann.

Die Lösung der gestellten Aufgaben wird bei einer Schichtfeder der eingangs genannten Art erfindungsgemäß durch die Merkmale des Anspruchs 1 erreicht.

Der Grundgedanke der Erfindung besteht darin, dass die Schichtfeder in Einzelsegmente aufgeteilt wird, die in bedarfsgerechterweise zu der Schichtfeder zusammengesetzt werden können. Hierfür werden die Blecheinlagen jeweils aus zwei Einzelblechen gebildet, so dass die Herstellung einzelner Schichten möglich ist, die dann zu mehreren zusammengesetzt die Schichtfeder bilden. Bei der zusammengesetzten Schichtfeder können die Einzelbleche form- oder kraftschlüssig miteinander verbunden werden. Bei Bedarf kann hier auch ein Verkleben der Einzelbleche miteinander vorgenommen werden. Bei der Herstellung der Elastomer-Einlagen wird unterschiedliches Elastomermaterial verwendet, so dass die einzelnen Federschichten bereits aus der Materialwahl heraus gesonderte ihnen zugewiesen Eigenschaften haben. Beispielsweise können sie eine unterschiedliche Shorehärte aufweisen. Bevorzugt werden die Blecheinlagen mit einer Dicke ausgeführt, welche der halben Dicke der bisher üblichen Blecheinlagen entspricht. Dadurch ist es möglich, dass die einzelnen Federschichten die gleichen Abmessungen haben wie die zum Stand der Technik zählenden Federschichten.

Für die Herstellung der Schichtfeder werden die einzelnen Elastomer-Einlagen an ihren Stützflächen mit einem Anschlussteil und einer Blecheinlage beziehungsweise auf beiden Seiten mit einer Blecheinlage verbunden. Diese Verbindung der Elastomer-Einlage mit den Anschlussteilen beziehungsweise Blecheinlagen erfolgt durch Vulkanisation. Die Schichtfeder selbst wird dann durch Zusammenfügen einzelner zueinander passender Federschichten gebildet.

### Kurzbeschreibung der Zeichnung

Anhand zweier Ausführungsbeispiele wird die Erfindung nachstehend näher erläutert.

Es zeigt:
- Figur 1: einen Schnitt durch eine konusförmige Schichtfeder,
- Figur 2: Draufsicht von Figur 1
- Figur 3: einen Längsschnitt gemäß der Linie A-A aus der Figur 4 durch eine Ultrabuchse und
- Figur 4: eine Stirnansicht der Ultrabuchse.

### Ausführung der Erfindung

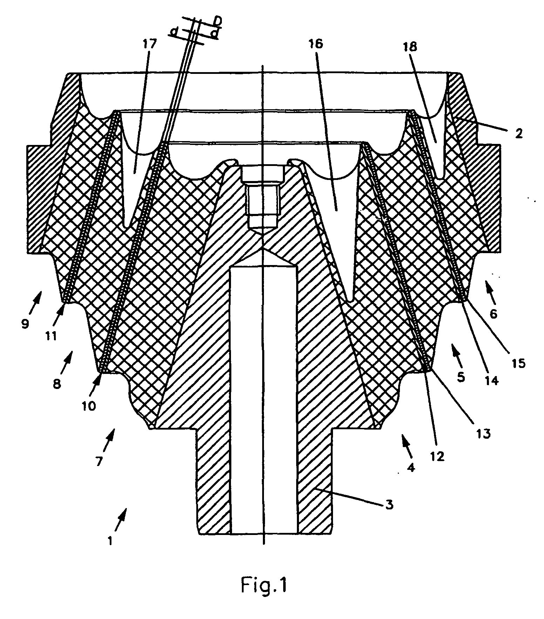

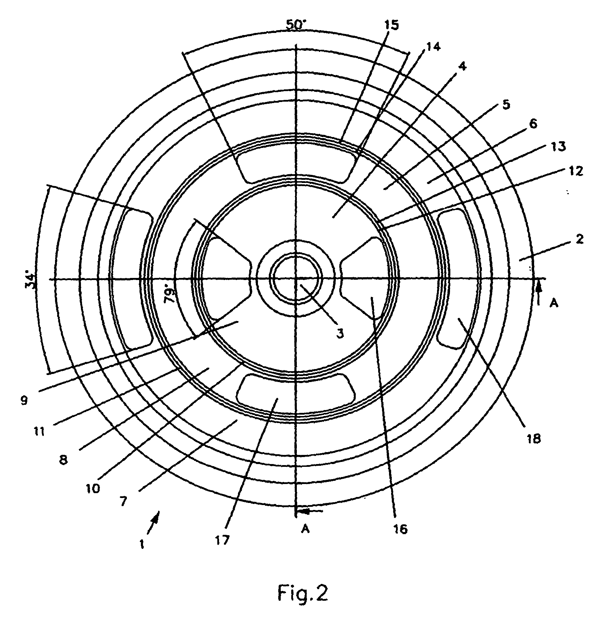

Die in den Figuren 1 und 2 gezeigte Schichtfeder 1, ist im Längsschnitt beziehungsweise in der Draufsicht gezeigt. Die Schichtfeder 1 besteht im wesentlichen aus dem äußeren Anschlussteil 2, dem inneren Anschlussteil 3 und den dazwischen liegenden Federschichten 4, 5, und 6. Jede Federschicht 4 bis 6 besteht aus einer Elastomer-Einlage 7, 8, und 9, die mit ihren konusförmigen Seiten mit den Anschlussteilen 2 beziehungsweise 3 und/oder den Blecheinlagen 10 oder 11 verbunden sind. Die Blecheinlagen 10 oder 11 bestehen jeweils aus zwei Einzelblechen 12, 13 beziehungsweise 14, 15 die bündig aneinander liegen. Um ein Verdrehen der Einzelbleche zueinander während des Betriebes zu verhindern, sind die Einzelbleche jeweils miteinander verklebt. Die Abmessungen der Schichtfeder 1 können so gewählt werden, dass sie identisch mit den Abmessungen einer an sich bekannten Schichtfeder sind. Die neue Schichtfeder kann somit anstelle der bisherigen Schichtfeder in die betreffende Maschine beziehungsweise in das Fahrzeug eingebaut werden. Der besondere Vorteil der neuen Schichtfeder 1 besteht darin, dass die einzelnen Teile, das heißt die jeweiligen Elastomer-Einlagen 7 bis 9 mit ihren Anschlussteilen 2 oder 3 und den Einzelblechen 12 bis 15 gesondert hergestellt werden können und erst danach zu einer Schichtfeder 1 zusammengesetzt werden können. Die Einzelfertigung der Federschichten 4 bis 6, ermöglicht die Herstellung von Elastomer-Einlagen 7 bis 9 mit sehr unterschiedlichen Mischungen und damit auch sehr unterschiedlichen chemikalischen und physikalischen Eigenschaften. Sie können hart oder weich ausgeführt werden, je nach Bedarf. Hiernach richtet sich auch die Auswahl der einzelnen Federschichten 4 bis 6, je nach vorgegebenem Verwendungszweck. Durch die erfindungsgemäße Ausbildung der Schichtfelder ist eine Verdrehung der Elastomereinlagen möglich. Dadurch können die sogenannten Fenster 16, 17 und 18 der einzelnen Lagen 7, 8 und 9 in eine gewollte Stellung gedreht werden, um dadurch die angestebten Federwege in den X, Y und Z-Richtungen einzustellen.

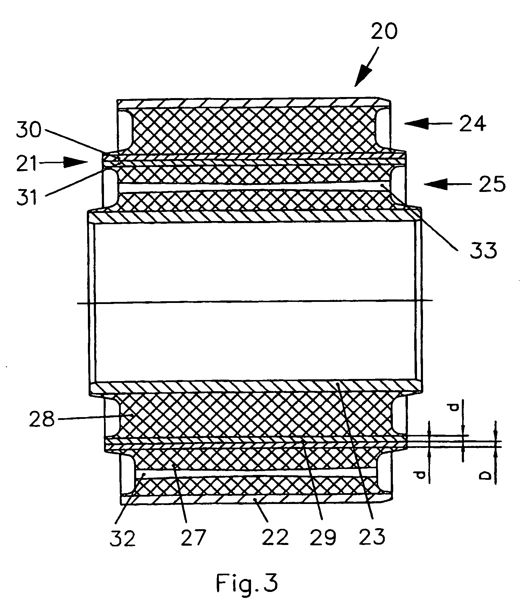

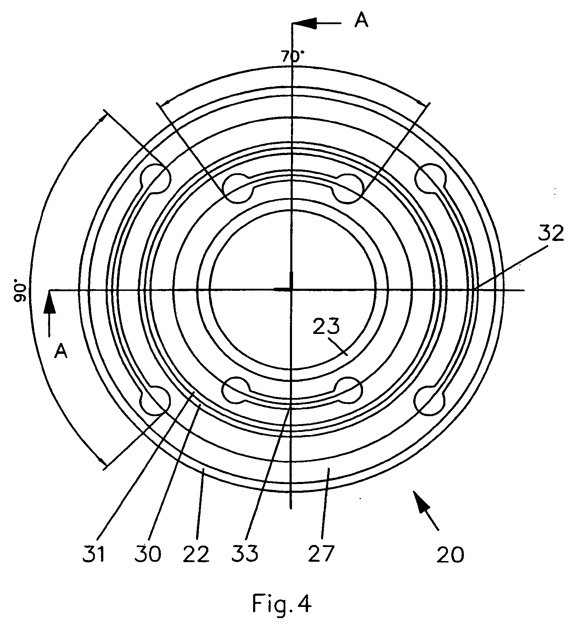

In den Figuren 3 und 4 ist eine Ultrabuchse 20 gezeigt, die nach dem erfindungsgemäßen Prinzip ausgebildet ist. Die Ultrabuchse 20 ist mit einer Schichtfeder 21 versehen. Die Schichtfeder 21 hat das äußere Anschlussteil 22 und das innere Anschlussteil 23. Dazwischen liegen die beiden Federschichten 24 und 25. Jede Federschicht 24 und 25 besitzt eine Elastomer-Einlage 27 und 28. Zwischen den Elastomer-Einlagen 27 und 28 befindet sich die Blecheinlage 29 die aus den beiden Einzelblechen 30 und 31 besteht. Die Dicke der Einzelbleche 30 und 31 beträgt d was der halben Dicke D einer üblichen Blecheinlage entspricht. Sowohl in der äußeren Federschicht 24 als auch in der innenliegenden Federschicht 25 sind Fenster 32 beziehungsweise 33 untergebracht. Die Einzelfertigung der Federschichten 24 und 25 ermöglicht auch hier eine sehr unterschiedliche Ausrichtung der Fenster 32 und 33 zueinander, wie sie beispielsweise in Figur 4 gezeigt ist. Die Fenster 32 erstrecken sich über 90° und die Fenster 33 über 70° auf dem jeweiligen Umfang der Elastomer-Einlage 27 beziehungsweise 28. Bei der Montage der einzelnen Federschichten 24 und 25 können dieselben gegeneinander verdreht werden, bis die Fenstern 32 und 33 in der gewollten Lage zu liegen kommen.

## Patentansprüche

1. Schichtfeder mit einem äußeren und einem inneren Anschlussteil und dazwischen liegenden Federschichten aus wechselweise einer Elastomer-Einlage und einer Blecheinlage, wobei die Blecheinlagen jeweils aus zwei Einzelblechen bestehen **dadurch gekennzeichnet, dass** die Verbindung der Elastomer-Einlagen (7 bis 9, 27, 28) mit den Anschlussteilen (2, 3) beziehungsweise Einzelblechen (12 bis 15, 30, 31) durch Vulkanisation hergestellt wurde, die Elastomer-Einlagen (7 bis 9, 27, 28) aus unterschiedlichem Elastomermaterial gebildet und mit Fenstern (16 bis 18, 32, 33) in Form von Freiräumen in beziehungsweise an den Elastomer-Einlagen versehen sind und dass die Einzelbleche (12 bis 15, 30, 31) für den Betrieb unverdrehbar miteinander verbunden sind.

2. Schichtfeder nach Anspruch 1, **dadurch gekennzeichnet, dass** die Elastomer-Einlagen (7 bis 9, 27, 28) eine unterschiedliche Shorehärte haben.

3. Schichtfeder nach einem der Ansprüche 1 oder 2, **dadurch gekennzeichnet, dass** die Einzelbleche (12 bis 15, 30, 31) form- oder kraftschlüssig miteinander verbunden sind.

4. Schichtfeder nach einem der Ansprüche 1 bis 3, **dadurch gekennzeichnet, dass** die Einzelbleche (12 bis 15, 30,31) miteinander verklebt sind.

## Claims

1. Multilayered spring with an outer and an inner connection part and, lying in between, spring layers made up alternately of an elastomer insert and a sheet metal insert, the sheet metal inserts respectively comprising two individual metal sheets, **characterized in that** the connection of the elastomer inserts (7 to 9, 27, 28) to the connection parts (2, 3) or individual metal sheets (12 to 15, 30, 31) is produced by vulcanization, the elastomer inserts (7 to 9, 27, 28) are formed from different elastomer material and are provided with windows (16 to 18, 32, 33) in the form of clearances in or on the elastomer inserts and **in that** the individual metal sheets (12 to 15, 30, 31) are non-rotatably connected to one another for operation.

2. Multilayered spring according to Claim 1, **characterized in that** the elastomer inserts (7 to 9, 27, 28) have a different Shore hardness.

3. Multilayered spring according to either of Claims 1 and 2, **characterized in that** the individual metal sheets (12 to 15, 30, 31) are positively or non-positively connected to one another.

4. Multilayered spring according to one of Claims 1 to 3, **characterized in that** the individual metal sheets (12 to 15, 30, 31) are adhesively bonded to one another.

## Revendications

1. Ressort multicouche comportant un élément de raccordement extérieur et un élément de raccordement intérieur et des couches élastiques situées entre ceux-ci, constituées en alternance d'une fourrure en élastomère et d'une chemise en tôle, les chemises en tôle étant constituées chacune de deux tôles individuelles, **caractérisé en ce que** la liaison des fourrures en élastomère (7 à 9, 27, 28) avec les éléments de raccordement (2, 3) ou selon le cas les tôles individuelles (12 à 15, 30, 31) est réalisée par vulcanisation, **en ce que** les fourrures en élastomère (7 à 9, 27, 28) sont formées à partir de différentes matières élastomères et sont pourvues de fenêtres (16 à 18, 32, 33) en forme d'espaces libres dans ou selon le cas sur les fourrures en élastomère et **en ce que** les tôles individuelles (12 à 15, 30, 31) sont reliées entre elles de manière à ne pas pouvoir tourner en cours d'exploitation.

2. Ressort multicouche selon la revendication 1, **caractérisé en ce que** les fourrures en élastomère (7 à 9, 27, 28) possèdent une dureté Shore différente.

3. Ressort multicouche selon la revendication 1 ou 2, **caractérisé en ce que** les tôles individuelles (12 à 15, 30, 31) sont reliées entre elles par fermeture géométrique ou par adhérence.

4. Ressort multicouche selon l'une quelconque des revendications 1 à 3, **caractérisé en ce que** les tôles individuelles (12 à 15, 30, 31) sont collées entre elles.
